# EUROPEAN PATENT APPLICATION

(11) **EP 4 633 176 A1**
(43) Date of publication of application: **15.10.2025**
(21) Application number: 23899970.0
(22) Date of filing: 05.12.2023
(51) Int. Cl.: H04N 21/4784

(54) **IMAGE PROCESSING METHOD AND APPARATUS**

(30) Priority: 06.12.2022 CN 202211558195
(71) Applicant: Beijing Zitiao Network Technology Co., Ltd., Beijing 100190 (CN)
(72) Inventor: BI, Yufei, Beijing 100028 (CN)
(74) Representative: Isarpatent
(86) International application number: PCT/CN2023/136497
(87) International publication number: WO 2024/120395

(57) **Abstract**

This application discloses an image processing method. In an example, the method may be applied to a first client. The first client may display a video playback page. The first client may display at least one template image in response to a first request for the video playback page, where the at least one template image includes a first template image. The first client may display, in response to a second request for the first template image, a second image obtained according to a first image and the first template image on the video playback page. It can be seen that by using the solution of this embodiment of this application, according to the first request and the second request for the video playback page, the second image that satisfies personalized requirements of a user can generate based on the first template image and the input first image, thereby improving interactive experience.

## Description

### CROSS-REFERENCE TO RELATED APPLICATION(S)

This application claims priority to the Chinese Patent Application No. 202211558195.2, filed on December 6, 2022, the disclosure of which is incorporated herein by reference in its entirety.

### FIELD

This application relates to the field of computer technology, and in particular, to an image processing method and apparatus.

### BACKGROUND

A user can watch a video through an application, and when the user watches the video, a certain interactive operation can be triggered on a video playback page. For example, when the user watches a live video played on a live streaming room page, the user can trigger interactive operations such as liking and commenting on the live streaming room page.

Currently, the interactive operations supported by the video playback page are relatively simple, and correspondingly, the interactive experience provided by these simple interactive operations cannot satisfy user requirements.

Therefore, there is an urgent need for a solution that can solve the above problems.

### SUMMARY

In order to solve or partially solve the above technical problems, embodiments of this application provide an image processing method and apparatus.

In a first aspect, an embodiment of this application provides an image processing method. The method includes:
displaying at least one template image in response to a first request for a video playback page, where the at least one template image includes a first template image; and
displaying, in response to a second request for the first template image, a second image obtained according to a first input image and the first template image on the video playback page.

Optionally, the displaying, in response to a second request for the first template image, a second image obtained according to a first input image and the first template image on the video playback page includes:
acquiring the first input image in response to the second request, and displaying the second image on the video playback page.

Optionally, the acquiring the first input image includes:
displaying a plurality of candidate images; and acquiring the first input image in response to a selection operation triggered for a first image from the plurality of candidate images; or,
acquiring the first input image captured in real time.

Optionally, the method further includes:
displaying the at least one template image in response to a template image change operation triggered for the second image, where the at least one template image includes a second template image; and
displaying, in response to the second request for the second template image, a fourth image obtained according to a third input image and the second template image on the video playback page.

Optionally, the method further includes:
in response to an input image change operation triggered for the second image, acquiring a fifth input image, and displaying a sixth image obtained according to the fifth input image and the first template image on the video playback page.

Optionally, the method further includes:
acquiring an edited content in response to an editing operation triggered for the second image; and
obtaining a seventh image including the edited content according to the edited content and the second image.

Optionally, the method further includes:
saving the second image in response to a save operation triggered for the second image.

Optionally, the method is applied to a first client, the video playback page is a live streaming room page, and the second image includes a first interaction identifier. The method further includes: sharing, in response to a share operation on the second image, the second image to a second client, to cause the second client to access, based on the first interaction identifier, the live streaming room page or a live replay page corresponding to the live streaming room page.

Optionally, the displaying at least one template image in response to a first request for a video playback page includes:
displaying the at least one template image in response to a first operation triggered for a target object on the live streaming room page.

Optionally, the target object includes a target resource identifier and a second interaction identifier, and the displaying the at least one template image in response to a first operation triggered for a target object on the live streaming room page includes:
displaying the at least one template image in response to a first operation triggered for the second interaction identifier.

Optionally, before the displaying the at least one template image, the method further includes:
displaying a completion progress of an interactive task corresponding to the target object on the live streaming room page; and
displaying the target object in response to the completion of the activity interactive task.

Optionally, the displaying the target object in response to the completion of the interactive task includes:
displaying a prompt message in response to the completion of the interactive task, where the prompt message is used to indicate that the target object is to be displayed; and
displaying the target object in response to the end of the display of the prompt message.

Optionally, before the displaying a progress of an interactive task corresponding to the target object on the live streaming room page, the method further includes:
displaying preview information of the interactive task on the live streaming room page.

Optionally, the interactive task is to trigger an interactive operation on the video playback page, and the displaying the target object in response to the completion of the interactive task includes:
receiving the interactive operation triggered on the live streaming room page; and
displaying the target object in response to the completion of the interactive task.

Optionally, the displaying the target object includes:
playing a video corresponding to the target object.

Optionally, the first template image is an image realted to a video played on the video playback page.

Optionally, the first template image is an image associated with at least one of a theme of the video, an event within the video, and a character included in the video.

In a second aspect, an embodiment of this application provides an image processing apparatus, including:
a first display unit, configured to display at least one template image in response to a first request for a video playback page, where the at least one template image includes a first template image; and
a second display unit, configured to display, in response to a second request for the first template image, a second image obtained according to a first input image and the first template image on the video playback page.

Optionally, the second display unit is configured to:
acquire the first input image in response to the second request, and display the second image on the video playback page.

Optionally, the acquiring the first input image includes:
displaying a plurality of candidate images; and acquiring the first input image in response to a selection operation triggered for a first image from the plurality of candidate images; or,
acquiring the first input image captured in real time.

Optionally, the apparatus further includes:
a third display unit, configured to display the at least one template image in response to a template image change operation triggered for the second image, where the at least one template image includes a second template image; and
a fourth display unit, configured to display, in response to the second request for the second template image, a fourth image obtained according to a third input image and the second template image on the video playback page.

Optionally, the apparatus further includes:
a first acquiring unit, configured to acquire a fifth input image in response to an input image change operation triggered for the second image; and
a fifth display unit, configured to display a sixth image obtained according to the fifth input image and the first template image on the video playback page.

Optionally, the apparatus further includes:
a second acquiring unit, configured to acquire an edited content in response to an editing operation triggered for the second image; and
a determination unit, configured to obtain a seventh image including the edited content according to the edited content and the second image.

Optionally, the apparatus further includes:
a save unit, configured to save the second image in response to a save operation triggered for the second image.

Optionally, the apparatus is applied to a first client, the video playback page is a live streaming room page, and the second image includes a first interaction identifier. The apparatus further includes:
a share unit, configured to: share, in response to a share operation on the second image, the second image to a second client, to cause the second client to access, based on the first interaction identifier, the live streaming room page or a live replay page corresponding to the live streaming room page.

Optionally, the first display unit is configured to:
display the at least one template image in response to a first operation triggered for a target object on the live streaming room page.

Optionally, the target object includes: a target resource identifier and a second interaction identifier. The first display unit is configured to:
display the at least one template image in response to a first operation triggered for the second interaction identifier.

Optionally, the apparatus further includes:
a sixth display unit, configured to display a completion progress of an interactive task corresponding to the target object on the live streaming room page before displaying the at least one template image; and
a seventh display unit, configured to display the target object in response to completion of the activity interactive task.

Optionally, the seventh display unit is configured to:
display a prompt message in response to the completion of the interactive task, where the prompt message is used to indicate that the target object is about to be displayed; and
display the target object in response to the end of the display of the prompt message.

Optionally, the apparatus further includes:
an eighth display unit, configured to display preview information of the interactive task on the live streaming room page before displaying a progress of the interactive task corresponding to the target object on the live streaming room page.

Optionally, the interactive task is to trigger an interactive operation on the video playback page, and the displaying the target object in response to the completion of the interactive task includes:
receiving the interactive operation triggered on the live streaming room page; and
displaying the target object in response to the completion of the interactive task.

Optionally, the displaying the target object includes:
playing a video corresponding to the target object.

Optionally, the first template image is an image associated with a video played on the video playback page.

Optionally, the first template image is an image associated with at least one of a theme of the video, an event within the video, and a character included in the video.

In a third aspect, an embodiment of this application provides a device. The device includes a processor and a memory; and
the processor is configured to execute instructions stored in the memory to cause the device to perform the method according to any one of items in the first aspect.

In a fourth aspect, an embodiment of this application provides a computer-readable storage medium, including instructions. The instructions instruct a device to perform the method according to any one of items in the first aspect.

In a fifth aspect, an embodiment of this application provides a computer program product. The computer program product, when running on a computer, causes the computer to perform the method according to any one of items in the first aspect.

Compared with the prior art, the embodiments of this application have the following advantages:
this embodiment of this application provides the image processing method, and in an example, the method may be applied to the first client. The first client may display the video playback page. The first client may display the at least one template image in response to the first request for the video playback page, where the at least one template image includes the first template image. The first client may display, in response to the second request for the first template image, the second image obtained according to the first image and the first template image on the video playback page. It can be seen that by using the solution of this embodiment of this application, according to the first request and the second request for the video playback page, the second image that satisfies personalized requirements of a user can generated based on the first template image and the first input image, thereby improving interactive experience.

### BRIEF DESCRIPTION OF THE DRAWINGS

In order to describe technical solutions in the embodiments of this application or in the prior art more clearly, the accompanying drawings required to be used in the descriptions of the embodiments or the prior art will be briefly introduced below, it is apparent that the accompanying drawings described below are only some embodiments recorded in this application, and those of ordinary skill in the art can obtain other accompanying drawings according to these accompanying drawings without creative work.
FIG. 1 is a schematic flowchart of an image processing method according to an embodiment of this application;
FIG. 2a is a schematic diagram of a video playback page according to an embodiment of this application;
FIG. 2b is a schematic diagram of another video playback page according to an embodiment of this application;
FIG. 2c is a schematic diagram of another video playback page according to an embodiment of this application;
FIG. 2d is a schematic diagram of another video playback page according to an embodiment of this application; and
FIG. 3 is a schematic diagram of a structure of an image processing apparatus according to an embodiment of this application.

### DETAILED DESCRIPTION OF EMBODIMENTS

In order to make those skilled in the art better understand the solutions of this application, the technical solutions in the embodiments of this application are clearly and completely described in conjunction with the accompanying drawings in the embodiments of this application as below, and it is apparent that the described embodiments are merely a part rather all embodiments of this application. All other embodiments obtained by those of ordinary skill in the art based on the embodiments of this application without creative efforts shall fall within the scope of protection of this application.

Various non-limiting implementations of this application are described in detail in conjunction with the accompanying drawings below.

### Exemplary method

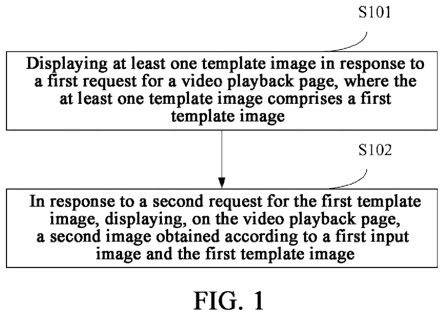

Referring to FIG. 1, FIG. 1 is a schematic flowchart of an image processing method according to an embodiment of this application. In this embodiment, the image processing method may be applied to a first client. As an example, the method may include, for example, the following steps S101 to S102.

S101: Display at least one template image in response to a first request for a video playback page, where the at least one template image includes a first template image.

This embodiment of this application does not specifically limit the video playback page. The video playback page may be a short video playback page, a long video playback page, a medium video playback page, or a live streaming room page, which is not specifically limited in this embodiment of this application. In this embodiment of this application, videos are classified into the "long video", the "short video", and the "medium video" from the dimension of video duration. Typically, the duration of the long video is greater than that of the medium video, and the duration of the medium video is greater than that of the short video.

In an example, the first request may be obtained according to a first operation triggered on the video playback page. This embodiment of this application does not specifically limit the first operation. In an example, the first operation may be a preset gesture triggered on the video playback page. In another example, the first operation may be an operation triggered for a certain object on the live streaming room page, such as a target object. In this case, at least one template image may be triggered through the target object on the live streaming room page, such that a second image may be obtained based on the first template image and a first input image, thereby satisfying personalized interaction requirements of a user.

This embodiment of this application does not specifically limit the target object, and the target object may be a virtual object displayed on the live streaming room page. As an example, the first operation may be a tap operation for the target object. As another example, the target object may include a target resource identifier and a second interaction identifier. The first operation triggered for the target object may be a first operation triggered for the second interaction identifier. The first operation triggered for the second interaction identifier may be, for example, a tap operation triggered for the second interaction identifier. The target resource identifier mentioned herein may include, but is not limited to, an image of a target resource, a name of the target resource, or an icon of the target resource. In an example, the second interaction identifier may include a text related to the target resource. For example, if the target resource is a gift, the second interaction identifier may include a text "Open gift" to guide the user to trigger the operation based on the second interaction identifier, thereby obtaining the target resource. The obtaining the target resource may be understood as obtaining a permission to generate a new image based on the template image and the input image.

In an example, before response to the first request, the first client may also display the target object on the live streaming room page, thereby allowing the user to trigger the first operation for the target object.

As an example, when the first client displays the target object, a static image corresponding to the target object may be directly displayed. In another example, to enrich a display effect of the target object, during specific implementation of displaying the target object through the first client, for example, a video corresponding to the target object may be played, namely a resource video, that is, the target object is dynamically displayed. In an example, the target object may include a target resource identifier and a second interaction identifier. In this case, the video of the target object may be a video including the target resource identifier and the second interaction identifier. When the playback of the resource video corresponding to the target object is finished, the resource identifier and the second interaction identifier continue to be displayed on the live streaming room page, and in response to a trigger operation on the second interaction identifier, the display of the resource identifier and the second interaction identifier is canceled, and at least one template image is displayed. In this case, the target resource identifier and the second interaction identifier are dynamically displayed to guide the user to obtain the target resource through the trigger operation on the second interaction identifier.

As another example, the first client may display the target object when a preset condition is met. This embodiment of this application does not specifically limit the preset condition, and the preset condition may be determined according to actual situations. In an example, to enhance interactive experience, the preset condition may be, for example, completion of an interactive task corresponding to the target object. In this case, to facilitate the user in determining a completion progress of the interactive task, the first client may also display the completion progress of the interactive task corresponding to the target object on the live streaming room page. For example, the first client may dynamically display a completion progress change process (e.g., a dynamically changing progress bar) in a preset area on the live streaming room page.

In an example, the first client may immediately display the target object when the interactive task is completed. In another example, to avoid abrupt user interactive experience caused by suddenly displaying the target object, the first client may display, in response to the completion of the interactive task, a prompt message used to indicate that the target object is about to be displayed. For example, the prompt message "Upcoming ** moment", where "**" may be the name of the target object, such as a gift. In an example, the first client may display the prompt message for a certain time, and after the display of the prompt message is ended, the first client may display the target object in response to the end of the display of the prompt message. By adopting the method, after the target object is displayed, the user is prompted through a method for displaying the prompt message, thereby avoiding the above situation of the abrupt user interactive experience caused by suddenly displaying the target object.

In an example, the prompt message may be displayed in the above preset area.

In an example, to facilitate the user in determining the interactive task, before the first client displays the progress of the interactive task corresponding to the target object, preview information of the interactive task may also be displayed on the live streaming room page, thereby facilitating the user in determining that the interactive task of the target object is about to begin. For example, the first client may display the preview information: "Upcoming ** interactive moment", where "**" may be an interactive operation corresponding to the interactive task corresponding to the target object, such as liking. In an example, the preview information may also be displayed in the above preset area. In a specific example, the preview information is displayed in the preset area. When the interactive task begins, the display of the preview information is canceled, and the completion progress of the interactive task is displayed in the preset area. When the interactive task is completed, the display of the completion progress of the interactive task is canceled, and the prompt message is displayed in the preset area. By adopting the method, different messages including the preview information, the interactive task progress, and the prompt message are displayed in the preset area at different time phases, such that the user can acquire the message associated with the target object through the preset area, and therefore user experience is good.

This embodiment of this application does not specifically limit the interactive task. The interactive task may be, for example, triggering the interactive operation on the live streaming room page, such as a liking operation, or an operation of sending a virtual resource. In an example, the first client may display the target object when the interactive operation triggered on the live streaming room page is received and the interactive task is completed. If the user does not trigger the interactive operation on the live streaming room page, the target object is not displayed. By adopting the method, the user may be encouraged in participating in the interactive task, thereby improving interactive fun.

The first template image is not specifically limited in this embodiment of this application. In an example, the first template image may be an image associated with a video played on the video playback page, such as an image associated with at least one of a theme of the video played on the video playback page, an event within the video, and a character included in the video. In this case, by using the solution of this embodiment of this application, the second image may be obtained based on the first image input by the user and the first template image associated with the video played on the video playback page, such that the second image is an image associated with the video playback page and the first image input by the user, thereby achieving an effect of customizing a memorial photo associated with the video played on the video playback page, and effectively improving user experience.

The theme of the video includes, but is not limited to, a concert, a competition, etc. The event within the video may be any one of events included in the video, such as an interactive event.

S102: Display, in response to a second request for the first template image, a second image obtained according to the first input image and the first template image on the video playback page.

In an example, the second request may be obtained according to a second operation triggered on the video playback page. This embodiment of this application does not specifically limit the second operation. The second operation may be, for example, a specific operation triggered for a certain control on the video playback page. For example, the first client may display the at least one template image on the video playback page in the form of an overlay. The overlay may also include a first control, and the user may trigger the second operation through the first control. In an example, the first control may be, for example, a generation control, which may display a corresponding text "Generate may memorial photo".

In an example, during specific implementation of S102, the first input image may be acquired in response to the second request, and the second image obtained according to the first image and the first template image is displayed on the video playback page. In an example, after acquiring the first image, the first client may generate the second image based on the first image and the first template image, and display the second image on the video playback page. In an example, the first client may display the second image on the video playback page in the form of an overlay.

In this embodiment of this application, acquiring the first input image may be acquiring a first image determined by the user. During specific implementation of acquiring the first input image, there may be a plurality of implementations, and two possible implementations are introduced below.

In an implementation, the first client may display a plurality of candidate images in response to the second request, and in an example, the plurality of candidate images may be, for example, images locally stored on a terminal device running the first client. After the plurality of candidate images are displayed, the user may select the first image from the plurality of candidate images. For example, the user may trigger a selection operation for the first image, and correspondingly, the first client may acquire the first image in response to the selection operation triggered for the first image. By adopting the method, the user may select the first image from the plurality of candidate images according to needs so as to generate the second image, thereby achieving the purpose of personalized customization of the memorial photo.

In another possible implementation, the first image may be an image captured by the terminal device in real time. In this case, the first client may activate a camera device of the terminal device in response to the second request. Correspondingly, the user may obtain the first image through shooting by the camera device, and the first image may be, for example, an image taken by the user. By adopting the method, the user may capture the first image in real time to generate the second image, thereby achieving the purpose of personalized customization of the memorial photo.

In an implementation, the first client may display the second image on the video playback page in the form of an overlay.

In an example, after the first client displays the second image, the user may also trigger a save operation for the second image, thereby saving the second image locally to the terminal device or a cloud corresponding to the terminal device. As an example, the overlay for displaying the second image may also include a save control, and the user may trigger a save operation on the second image through the save control.

In an example, when the video playback page is the live streaming room page, the second image may include a first interaction identifier, and the first interaction identifier may be used to trigger access to the live streaming room page or a live replay page corresponding to the live streaming room page. As an example, the user may trigger a share operation on the second image, and correspondingly, the first client may share the second image to a second client in response to the share operation. As an example, the second image may include a share control, and the user may trigger the above share operation through the share control. After the second image is shared to the second client, the second client may use the first interaction identifier to access the live streaming room page or the live replay page corresponding to the live streaming room page, thereby allowing the second client to rapidly display the video played by the live streaming room page. If a live stream corresponding to the live streaming room page has ended, the second client access the live replay page corresponding to the live streaming room page based on the first interaction identifier, and if the live stream corresponding to the live streaming room page has not ended, the second client may access the live streaming room page based on the first interaction identifier.

In an example, after the first client displays the second image, if the user is dissatisfied with the second image, the user may also perform following steps A1 to A2 or B1 to B2, so as to generate a new image.

Step A1: Display the at least one template image in response to a template image change operation triggered for the second image, where the at least one template image includes a second template image.

In an example, the overlay for displaying the second image may also include a template image change control, and the user may trigger the template image change control on the second image through the template image change control.

The first client may display the at least one template image in response to the template image change operation, thereby allowing the user to reselect other template images from the plurality of template images.

Step A2: Display, in response to the second request for the second template image, a fourth image obtained according to a third input image and the second template image on the video playback page.

In an example, the at least one template image includes the second template image, and for the second request for the second template image, reference may be made to the above description part of "a second request for the first templateobject", which is not specifically limited in this embodiment of this application.

Regarding the third image, it should be noted that:
in an implementation, the third image may be the same as the first image. In this case, in an example, the first client may directly acquire the above first image in response to the second request for the second template image, generate a fourth image based on the first image and the second template image, and display the fourth image on the video playback page. In this case, the user does not need to re-input an image (e.g., selecting an image from the plurality of candidate images, or capturing an image in real time), thereby making user operations convenient.

In another implementation, the third image may be different from the first image. In this case, in an example, the first client may acquire a third input image in response to the second request for the second template image, generate a fourth image based on the third image and the second template image, and display the fourth image on the video playback page. During specific implementation of acquiring a third input image, the third image captured in real time may be acquired, and the third image selected by the user from the plurality of candidate images may also be acquired, which is not specifically limited in this embodiment of this application. In this case, the user can not only reselect the template image but also reselect the third input image, such that the generated fourth image can better satisfy personalized requirements of the user.

Step B1: Acquire a fifth input image in response to an input image change operation triggered for the second image.

Step B2: Display a sixth image obtained according to the fifth image and the first template image on the video playback page.

In an example, the overlay for displaying the second image may also include an input image change control, and the user may trigger the input image change operation on the second image through the input image change control.

The first client may acquire the fifth input image in response to the input image change operation. During specific implementation of acquiring a fifth input image, the fifth image captured in real time may be acquired, and the fifth image selected by the user from the plurality of candidate images may also be acquired, which is not specifically limited in this embodiment of this application.

After acquiring the fifth image, the first client may generate the sixth image based on the first template image and the fifth image, and display the sixth image on the video playback page.

By adopting steps B1 to B2, the user may change the first input image, thereby obtaining the sixth image based on the changed fifth image, so as to better satisfy user requirements.

In an example, the user may also trigger an editing operation for the second image. For example, the user may trigger the editing operation in a specific area in the second image. For example, the user may tap the specific area, and after tapping the specific area, the user may edit content in the specific area. Further, the user may edit the content in the specific area. Correspondingly, the first client may acquire the edited content, and obtain a seventh image including the edited content according to the edited content and the second image. In an example, the seventh image may be the second image with the added edited content. By adopting the method, the user may edit the desired content on the second image, such that the obtained seventh image is more memorable, thereby effectively improving user experience.

In some other embodiments, the user may also trigger the save operation on the first template image, thereby saving the first template image locally to the terminal device or the cloud corresponding to the terminal device.

The image processing method provided in this embodiment of this application is introduced above, and next, the solution of this embodiment of this application is introduced in conjunction with the accompanying drawings.

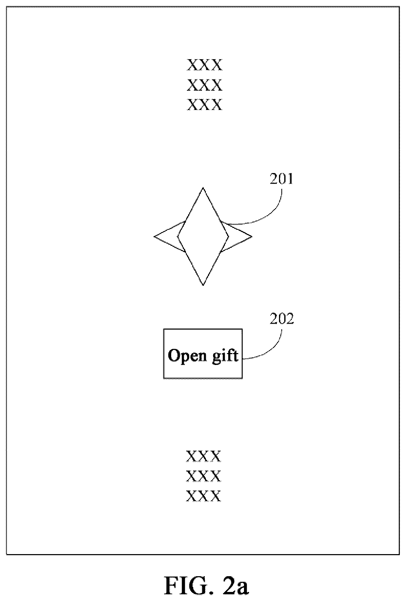

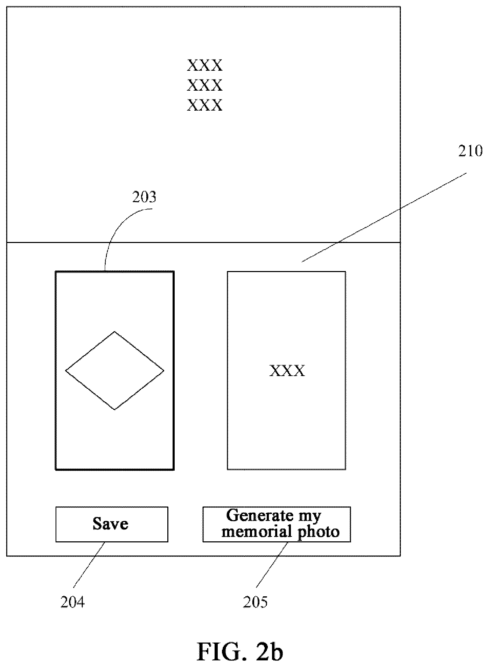

Referring to FIG. 2a, the figure is a schematic diagram of a structure of a video playback page according to an embodiment of this application. As shown in FIG. 2a, the video playback page includes a target resource identifier 201 and a second interaction identifier 202. After the user triggers the tap operation for the second interaction identifier 202, the video playback page is shown in FIG. 2b, an overlay 210 on the video playback page displays at least one template image, and the user may trigger a a swipe operation on the overlay to check the various template images.

In an example, the user selects a first template image 203. For example, in FIG. 2b, the first template image 203 is in a selected state (indicated by a bold border), and in this case, the overlay 210 also displays a save control 204 and a memorial photo generation control 205.

The user may trigger an operation of saving the first template image 203 through the save control 204.

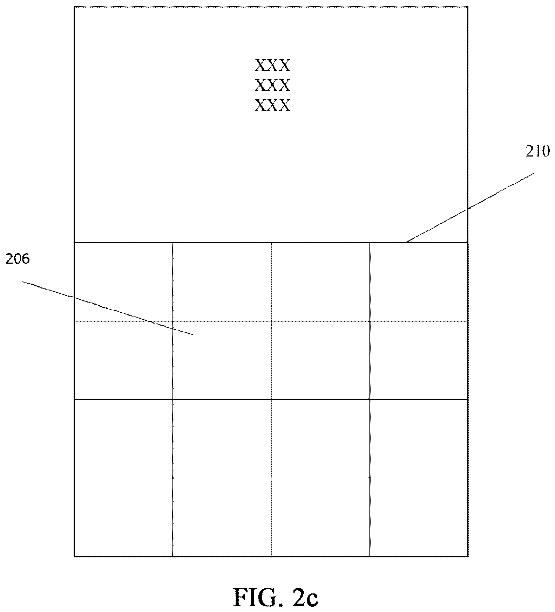

The user may trigger an operation of generating a memorial photo through the memorial photo generation control 205.In an example, after the user taps the memorial photo generation control 205, the video playback page is shown in FIG. 2c, and the overlay 210 displays at least one candidate image, where each box on the overlay 210 represents one candidate image. The user may trigger the swipe operation on the overlay 210 to check the plurality of candidate images.

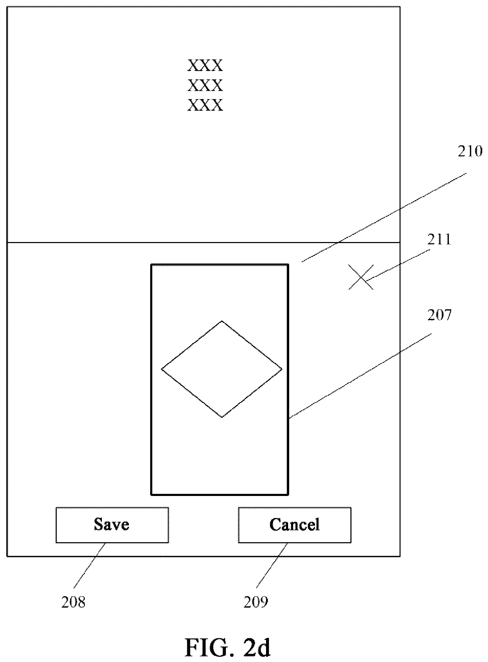

In an example, if the user triggers the selection operation on a first image 206 in the plurality of candidate images, the video playback page displayed by the first client is shown in FIG. 2d, and the overlay 210 displays a second image 207 obtained according to the first template image 203 and the first image 206.Additionally, the overlay 210 also displays a save control 208 and a cancel control 209.The cancel control 209 may correspond to the above-mentioned template image change control, or the above-mentioned input image change control.

In an example, the overlay 210 shown in FIG. 2d may also include a close control 211. The user may trigger the operation of canceling the display of the overlay 210 through the close control 211. Correspondingly, after the first client receives the operation on the close control 221, the display of the overlay 210 may be canceled, and in this case, the second image 207 and other controls displayed on the overlay 210 are not displayed on the video playback page.

It should be noted that in FIG. 2a to FIG. 2d, other contents on the video playback page and contents of other template images are represented by "XXX". Additionally, FIGS. 2a to 2d are only shown to facilitate understanding of the relevant content of the solution and do not constitute limitations on the embodiments of this application.

### Exemplary device

Based on the method provided in the above embodiment, an embodiment of this application further provides an apparatus. The apparatus is introduced in conjunction with the accompanying drawings below.

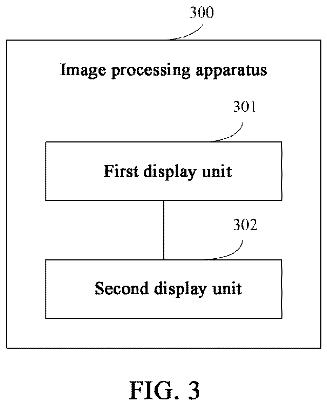

Referring to FIG. 3, the figure is a schematic diagram of a structure of an image processing apparatus according to an embodiment of this application. The apparatus 300 may specifically include, for example, a first display unit 301 and a second display unit 302.

The first display unit 301 is configured to display at least one template image in response to a first request for a video playback page, where the at least one template image includes a first template image; and
the second display unit 302 is configured to display, in response to a second request for the first template image, a second image obtained according to a first input image and the first template image on the video playback page.

Optionally, the second display unit 302 is configured to:
acquire the first input image in response to the second request, and display the second image on the video playback page.

Optionally, the step of acquiring the first input image includes:
displaying a plurality of candidate images; and acquiring the first image in response to a selection operation triggered for a first image from the plurality of candidate images; or,
acquiring the first image captured in real time.

Optionally, the apparatus further includes:
a third display unit, configured to display the at least one template image in response to a template image change operation triggered for the second image, where the at least one template image includes a second template image; and
a fourth display unit, configured to display, in response to the second request for the second template image, a fourth image obtained according to a third input image and the second template image on the video playback page.

Optionally, the apparatus further includes:
a first acquiring unit, configured to acquire a fifth input image in response to an input image change operation triggered for the second image; and
a fifth display unit, configured to display a sixth image obtained according to the fifth image and the first template image on the video playback page.

Optionally, the apparatus further includes:
a second acquiring unit, configured to acquire an edited content in response to an editing operation triggered for the second image; and
a determination unit, configured to obtain a seventh image including the edited content according to the edited content and the second image.

Optionally, the apparatus further includes:
a save unit, configured to save the second image in response to a save operation triggered for the second image.

Optionally, the apparatus is applied to a first client, the video playback page is a live streaming room page, and the second image includes a first interaction identifier. The apparatus further includes:
a share unit, configured to: share, in response to a share operation on the second image, the second image to a second client, to cause the second client to access, based on the first interaction identifier, the live streaming room page or a live replay page corresponding to the live streaming room page.

Optionally, the first display unit 301 is configured to:
display the at least one template image in response to a first operation triggered for a target object on the live streaming room page.

Optionally, the target object includes: a target resource identifier and a second interaction identifier. The first display unit 301 is configured to:
display the at least one template image in response to a first operation triggered for the second interaction identifier.

Optionally, the apparatus further includes:
a sixth display unit, configured to display a completion progress of an interactive task corresponding to the target object on the live streaming room page before displaying the at least one template image; and
a seventh display unit, configured to display the target object in response to completion of the activity interactive task.

Optionally, the seventh display unit is configured to:
display a prompt message in response to the completion of the interactive task, where the prompt message is used to indicate that the target object is about to be displayed; and
display the target object in response to the end of the display of the prompt message.

Optionally, the apparatus further includes:
an eighth display unit, configured to display preview information of the interactive task on the live streaming room page before displaying a progress of the interactive task corresponding to the target object on the live streaming room page.

Optionally, the interactive task is to trigger an interactive operation on the video playback page, and the step of displaying the target object in response to the completion of the interactive task includes:
receiving the interactive operation triggered on the live streaming room page; and
displaying the target object in response to the completion of the interactive task.

Optionally, the displaying the target object includes:
playing a video corresponding to the target object.

Optionally, the first template image is an image associated with a video played on the video playback page.

Optionally, the first template image is an image associated with at least one of a theme of the video, an event within the video, and a character included in the video.

Because the apparatus 300 is an apparatus corresponding to the method provided in the above method embodiments, and specific implementations of various units of the apparatus 300 and the above method embodiments belong to the same concept, for the specific implementations of the various units of the apparatus 300, reference may be made to a description part of the above method embodiments, which will not be repeated herein.

An embodiment of this application further provides a device. The device includes a processor and a memory.

The processor is configured to execute instructions stored in the memory, such that the device performs the image processing method according to any one of the above method embodiments.

An embodiment of this application further provides a computer-readable storage medium including instructions. The instructions instruct a device to perform the image processing method according to any one of the above method embodiments.

An embodiment of this application provides a computer program product. The computer program product, when running on a computer, causes the computer to perform the image processing method according to any one of the above method embodiments.

After considering the specification and practicing the invention disclosed herein, those skilled in the art will easily conceive of other implementation solutions of this application. This application is intended to cover any variations, uses, or adaptive changes of this application, which follow the general principles of this application and include common general knowledge or customary technical means in the art that are not disclosed in the present disclosure. The specification and the embodiments are merely to be considered as illustrative, while the true scope and spirit of this application are indicated by the claims below.

It should be understood that this application is not limited to the precise structures described above and shown in the accompanying drawings, and various modifications and changes may be made without departing from its scope. The scope of this application is merely limited by the appended claims.

The foregoing descriptions are merely preferred embodiments of this application, but are not intended to limit this application. Any modification, equivalent replacement, improvement, etc. made within the spirit and principle of this application shall fall within the scope of protection of this application.

## Claims

1. An image processing method, comprising:
displaying at least one template image in response to a first request for a video playback page, wherein the at least one template image comprises a first template image; and
in response to a second request for the first template image, displaying, on the video playback page, a second image obtained according to a first input image and the first template image.

2. The method according to claim 1, wherein in response to the second request for the first template image, displaying, on the video playback page, the second image obtained according to the first input image and the first template image, comprises:
acquiring the first input image in response to the second request, and displaying the second image on the video playback page.

3. The method according to claim 2, wherein acquiring the first input image comprises:
displaying a plurality of candidate images, and acquiring the first input image in response to a selection operation triggered for a first image from the plurality of candidate images; or,
acquiring the first input image that is captured in real time.

4. The method according to claim 1, further comprising:
displaying the at least one template image in response to a template image change operation triggered for the second image, wherein the at least one template image comprises a second template image; and
in response to the second request for the second template image, displaying, on the video playback page, a fourth image obtained according to a third input image and the second template image.

5. The method according to claim 1, further comprising:
in response to an input image change operation triggered for the second image, acquiring a fifth input image, and displaying, on the video playback page, a sixth image obtained according to the fifth input image and the first template image.

6. The method according to claim 1, further comprising:
acquiring edited content in response to an editing operation triggered for the second image; and
obtaining a seventh image comprising the edited content according to the edited content and the second image.

7. The method according to claim 1, further comprising:
saving the second image in response to a save operation triggered for the second image.

8. The method according to claim 1, wherein the method is applied to a first client, the video playback page is a live streaming room page, the second image comprises a first interaction identifier, and the method further comprises:
in response to a share operation for the second image, sharing the second image to a second client, to cause the second client to access, based on the first interaction identifier, the live streaming room page or a live replay page corresponding to the live streaming room page.

9. The method according to claim 1, wherein displaying the at least one template image in response to the first request for the video playback page comprises:
displaying the at least one template image in response to a first operation triggered for a target object on the live streaming room page.

10. The method according to claim 9, wherein the target object comprises a target resource identifier and a second interaction identifier, and wherein displaying the at least one template image in response to the first operation triggered for the target object on the live streaming room page comprises:
displaying the at least one template image in response to a first operation triggered for the second interaction identifier.

11. The method according to claim 9, wherein before displaying the at least one template image, the method further comprises:
displaying a completion progress of an interactive task corresponding to the target object on the live streaming room page; and
displaying the target object in response to a completion of the activity interactive task.

12. The method according to claim 11, wherein displaying the target object in response to the completion of the interactive task comprises:
displaying a prompt message in response to the completion of the interactive task, wherein the prompt message is used to indicate that the target object is to be displayed; and
displaying the target object in response to an end of the display of the prompt message.

13. The method according to claim 11, wherein before displaying a progress of an interactive task corresponding to the target object on the live streaming room page, the method further comprises:
displaying preview information of the interactive task on the live streaming room page.

14. The method according to any of claims 11 to 13, wherein the interactive task is to trigger an interactive operation on the video playback page, and wherein displaying the target object in response to the completion of the interactive task comprises:
receiving the interactive operation triggered on the live streaming room page; and
displaying the target object in response to the completion of the interactive task.

15. The method according to claim 14, wherein displaying the target object comprises:
playing a video corresponding to the target object.

16. The method according to claim 1, wherein the first template image is an image related to a video played on the video playback page.

17. The method according to claim 16, wherein the first template image is an image associated with at least one of a theme of the video, an event within the video, and a character included in the video.

18. An image processing apparatus, comprising:
a first display unit, configured to display at least one template image in response to a first request for a video playback page, wherein the at least one template image comprises a first template image; and
a second display unit, configured to display, on the video playback page, a second image obtained according to a first input image and the first template image, in response to a second request for the first template image.

19. A device, comprising a processor and a memory;
wherein the processor is configured to execute instructions stored in the memory to cause the device to perform the method according to any of claims 1 to 17.

20. A computer-readable storage medium, comprising instructions, wherein the instructions instruct a device to perform the method according to any of claims 1 to 17.
